# EUROPÄISCHE PATENTSCHRIFT

(11) **EP 0 484 590 B1**
(45) Veröffentlichungstag und Bekanntmachung des Hinweises auf die Patenterteilung: **08.03.1995**
(21) Anmeldenummer: 90123706.5
(22) Anmeldetag: 10.12.1990
(51) Int. Cl.: F16D 65/22, F16D 51/22

(54) **Trommelbremse mit Führungsrohr zur Führung des Handbremsseiles**
Drum brake with guide tube for guiding the handbrake cable
Frein à tambour à tube-guide pour le guidage du câble de frein à main

(30) Priorität: 06.11.1990 DE 4035237
(43) Veröffentlichungstag der Anmeldung: 13.05.1992
(73) Patentinhaber: LUCAS INDUSTRIES PUBLIC LIMITED COMPANY, Solihull, West Midlands B91 3TX (GB)
(72) Erfinder: Adam, Johann, W-6520 Limburg 1 (DE); Brix, Hermann, W-5407 Boppard 4 (DE)
(74) Vertreter: von Hellfeld, Axel, Dr. Dipl.-Phys.

(56) Entgegenhaltungen:
- DE-A- 3 018 296
- DE-U- 8 804 606
- US-A- 2 041 492
- US-A- 4 932 503
- PATENT ABSTRACTS OF JAPAN, vol. 7, no. 81 (M-205)(1226) 5, April 1983, & JP-A-58008835 (NISSAN JIDOSHA K.K.) 19.01.1983

## Beschreibung

Die Erfindung betrifft eine Trommelbremse, insbesondere für Kraftfahrzeuge, mit einer Feststellbremse, deren Bremsseilzug mit einem in der Trommelbremse angeordneten Handbremshebel lösbar verbunden ist, indem der Bremsseilzug mit einem Nippel an seinem zugehörigen freien Ende durch ein in der Ankerplatte befestigtes Führungsrohr mit einer Durchgangsausnehmung in eine am Handbremshebel vorgesehene Halterung geführt ist.

Der Bremsseilzug einer Feststellbremse ist üblicherweise mit einem in der Trommelbremse angeordneten Handbremshebel lösbar verbunden, so daß der Bremsseilzug austauschbar ist. Aus dem deutschen Gebrauchsmuster DE 88 04 606.0 ist bereits eine Trommelbremse mit einem Führungsrohr für den Bremsseilzug bekannt. Dieses Führungsrohr ermöglicht es, den Bremsseilzug am Handbremshebel der bereits zusammengebauten und am Fahrzeug montierten Bremse zu befestigen. Das Führungsrohr ist aus Stahl gefertigt und mit der Ankerplatte der Bremse verschweißt. Es weist eine leichte Krümmung auf, so daß ein bequemes Einführen des Bremsseilzuges in die Bremse ermöglicht ist.

Um ein schnelles Ansprechen der Feststellbremse zu erreichen, ist der Bremsseilzug so eingebaut, daß er stets unter einer leichten Vorspannung steht. Das führt dazu, daß der Bremsseilzug in der Krümmung des Führungsrohres immer an der gleichen Stelle anliegt. Beim Betätigen der Handbremse und beim Einleiten hoher Seilkräfte wird an dieser Anlagestelle im Laufe der Zeit das Schmiermittel vollständig abgetragen und es kann zu Kontaktkorrosion und einer Beschädigung des Bremsseilzuges kommen. Bei älteren Fahrzeugen kann deshalb die Funktionssicherheit der Feststellbremse gefährdet sein.

Aus der JP-A-58008835 ist eine Trommelbremse mit einem Führungsrohr der hier in Rede stehenden Art bekannt, wobei das Führungsrohr aus Metall besteht und eine Kunststoffeinlage aufweist, in der der Bremsseilzug gleitend geführt ist, insbesondere im Bereich einer Krümmung des Führungsrohres. Allerdings sind hier zwei Bauteile vorzusehen und zu montieren, nämlich das metallische Führungsrohr und die Kunststoffeinlage.

Der Erfindung liegt die Aufgabe zugrunde, eine Trommelbremse der eingangs genannten Art zu schaffen, bei der eine einfache Montage möglich ist.

Die erfindungsgemäße Lösung dieser Aufgabe ist im Patentanspruch 1 gekennzeichnet.

Bei der erfindungsgemäßen Trommelbremse wird der Bremsseilzug an dem Handbremshebel befestigt, indem der mit dem entsprechenden Ende des Bremsseilzuges fest verbundene Nippel in eine von außen frei zugänglichhe Öffnung des Führungsrohres eingeführt und durch das einen genügend großen Innendurchmesser aufweisende Führungsrohr vorgeschoben wird, bis der Nippel auf den hier nicht weiter beschriebenen Handbremshebel trifft, der eine entsprechend ausgeführte Halterung aufweist, in die der Nippel eingreift und dann dort arretiert ist.

Erfindungsgemäß ist die Gleitfläche innerhalb des Führungsrohres aus Polyoxymethylen gefertigt. Dieser Kunststoff weist eine hohe Steifigkeit und Härte verbunden mit guter Formbeständigkeit auf. Gleichzeitig besitzt er gute Gleiteigenschaften und niedrige Abriebwerte, was für die hier geschilderte Anwendung vorteilhaft ist.

In einer bevorzugten Ausführungsform der Erfindung weist das Führungsrohr einen der Befestigung an der Ankerplatte der Bremse dienenden Ansatz auf. Beispielsweise kann die Befestigung an der Ankerplatte durch eine Schnappverbindung erfolgen, d. h., daß der Ansatz des Führungsrohres in eine Ausnehmung der Ankerplatte einrastet. Auch ist es möglich, eine Bajonettverbindung vorzusehen, so daß der Ansatz durch eine Ausnehmung in der Ankerplatte geführt und durch eine anschließende Drehbewegung befestigt wird.

Um das Einführen des Bremsseilzuges mit dem an ihm befestigten Nippel in das Führungsrohr zu erleichtern, ist bei einer bevorzugten Ausführungsform der Erfindung eine zur Außenseite der Bremse weisende Öffnung des Führungsrohres in Form eines ovalen Trichters gestaltet. Vorzugsweise stützt sich der untere Teil des Trichterrandes auf der Ankerplatte ab und leitet so bereits einen Teil der Seilkraft in sie ein. An der zur Ankerplatte weisenden Außenseite des Führungsrohres ist ein sich in Längsrichtung erstreckender Steg angeordnet, der sowohl der Stabilität des Führungsrohres als auch der Einleitung der Seilkraft in die Ankerplatte dient. Vorzugsweise ist im Bereich der Hauptkrümmung des Führungsrohres ein weiterer, sich quer zum vorgenannten erstreckender Steg angeordnet, der für eine bessere Abstützung des Führungsrohres auf der Ankerplatte der Bremse sorgt und ebenfalls zur Krafteinleitung in sie dient.

Damit der Bremsseilzug insbesondere im Bereich der Hauptkrümmung des Führungsrohres nicht nur eine Linienberührung mit entsprechend hoher Materialbelastung erfährt, weist eine bevorzugte Ausführungsform der Erfindung zumindest im Bereich der Hauptkrümmung der Durchgangsausnehmung des Führungsrohres eine längliche Mulde auf, die zur Aufnahme des Bremsseilzuges dient und deren Abmessungen so gewählt sind, daß der Bremsseilzug auf einer möglichst großen Fläche Kontakt mit dem Führungsrohr hat. Durch die damit erreichte Reduzierung der Flächenpressung wird einerseits der Bremsseilzug geschont und andererseits das Material des Führungsrohres nicht beschädigt. Durch die guten Gleiteigenschaften des verwendeten Materials des Führungsrohres ist eine leichtgängige Betätigung der Feststellbremse gewährleistet.

Eine erfindungsgemäße Trommelbremse wurde einem Testprogramm unterzogen, bei dem der Bremsseilzug der Feststellbremse 125.000mal mit einer Kraft von 125 kp betätigt wurde. Danach wurde die Bremse auseinandergenommen und das Führungsrohr aufgesägt und begutachtet. Mit bloßem Auge waren nur geringe Schleifspuren entlang der Auflagefläche des Bremsseilzuges im Führungsrohr zu erkennen.

Weitere Einzelheiten der Erfindung gehen aus der nachfolgend beschriebenen Zeichnung bevorzugter Ausführungsformen hervor. Es zeigt:
- Fig. 1: eine Ansicht einer geöffneten Trommelbremse;
- Fig. 2: den Schnitt A-A aus Fig. 1;
- Fig. 3: den Schnitt B-B aus Fig. 2;
- Fig. 4a: eine Seitenansicht eines Führungsrohres sowie eine 90° gedrehte Ansicht der trichterförmigen Öffnung des Führungsrohres;
- Fig. 4b: eine andere Ausführungsform eines der Befestigung in der Ankerplatte dienenden Ansatzes des Führungsrohres;
- Fig. 4c: eine Ausnehmung in der Ankerplatte in einer Form entsprechend dem in Fig. 4b gezeigten Ansatz;
- Fig. 5a: einen Längsschnitt durch ein Führungsrohr;
- Fig. 5b: den Schnitt B-B aus Fig. 5a;
- Fig. 5c: den Schnitt C-C aus Fig. 5a;
- Fig. 6: schematisch eine Montage eines Führungsrohres der Ausführungsform gemäß Fig. 4b;
- Fig. 7a: einen schematischen Längsschnitt durch eine Spritzgußform für ein Führungsrohr;
- Fig. 7b: den Schnitt D-D aus Fig. 7a;
- Fig. 7c: den Schnitt E-E aus Fig. 7a;

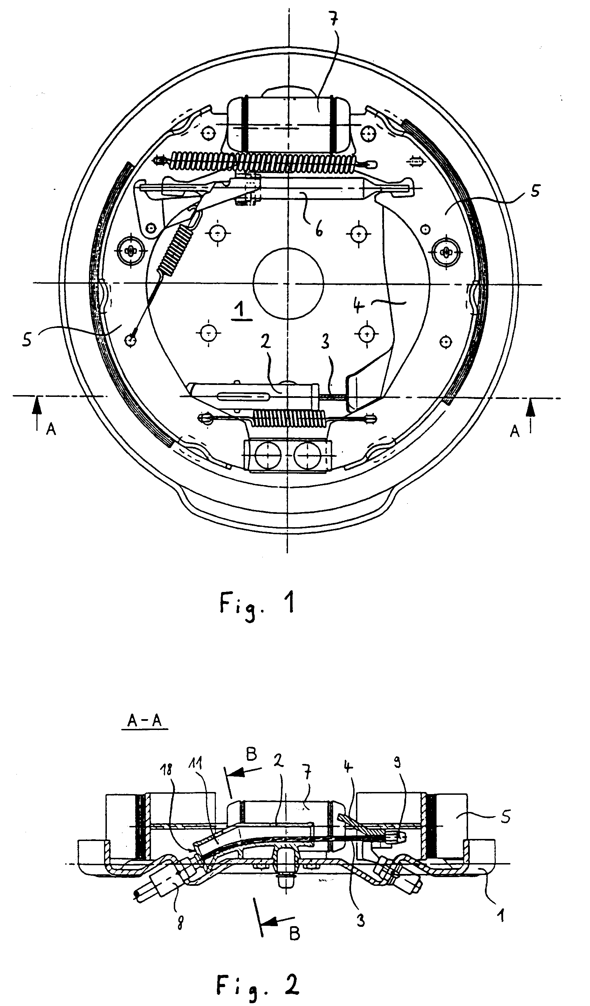

Die in Fig. 1 dargestellte Trommelbremse weist eine Ankerplatte 1 auf, in der ein Führungsrohr 2 befestigt ist, durch das sich ein Bremsseilzug 3 erstreckt, der in eine hier nicht gezeigte Halterung eines Handbremshebels 4 eingreift. Der Handbremshebel 4 ist an einem Bremsbacken 5 drehbar gelagert. Bei Betätigen der Feststellbremse wird über den Bremsseilzug 3 eine Kraft auf den Handbremshebel 4 aufgebracht, die ihn im Uhrzeigersinn dreht. Dadurch wird sowohl über die Drehverbindung des Handbremshebels 4 die rechte Bremsbacke 5 nach außen gedrückt als auch ein über ein am Handbremshebel 4 angreifendes Gestänge 6 die Kraft auf den linken Bremsbacken 5 übertragen und dieser ebenfalls nach außen gegen eine hier nicht gezeigte Bremstrommel gepreßt. Bei Betätigen der Betriebsbremse pressen Kolben eines Rad-Bremszylinders 7 die beiden Bremsbacken 5 gegen eine nicht gezeigte Bremstrommel.

In Fig. 2 ist der Schnitt A-A aus Fig. 1 gezeigt. Der Bremsseilzug 3 wird mit einer Durchführung 8 durch die Ankerplatte 1 in das Innere der Trommelbremse geführt. Durch das gekrümmte Führungsrohr 2 wird der Bremsseilzug 3 derart geführt, daß ein an seinem Ende befestigter Nippel 9 auf den Handbremshebel 4 trifft und dort in eine nicht gezeigte Halterung einklinkt. In Fig. 2 ist deutlich zu erkennen, daß der Bremsseilzug 3 nahezu auf der gesamten Länge einer Durchgangsausnehmung 11 des Führungsrohres 2 aufliegt und daß der Gleitradius des Führungsrohres 2 dem Verlauf des Bremsseilzuges 3 angepaßt ist. Weiterhin ist zu erkennen, daß der Rand einer ovalen Trichteröffnung 18, die dem leichten Einführen des Bremsseilzuges 3 in das Führungsrohr 2 dient, auf der Ankerplatte 1 aufliegt und so bereits einen Teil der Seilkraft in die Ankerplatte 1 einleitet.

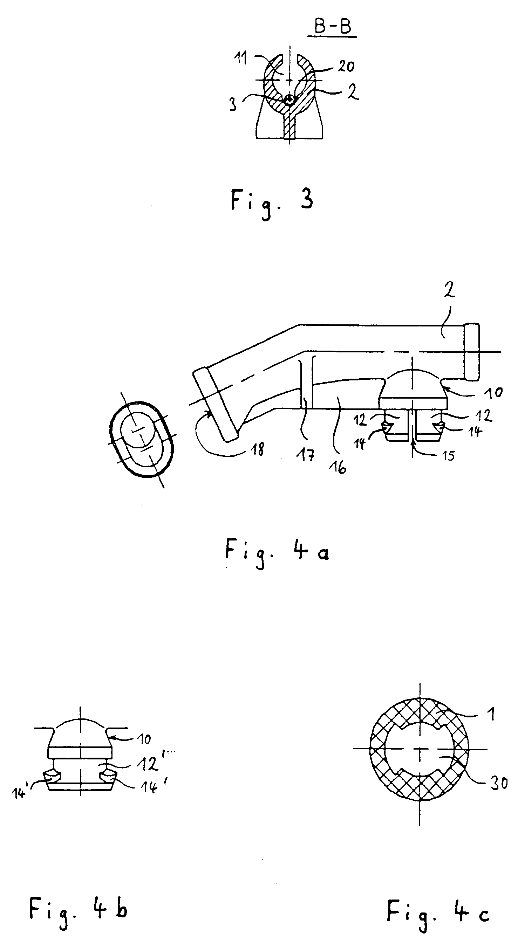

Fig. 3 zeigt den Schnitt B-B aus Fig. 2. Der Bremsseilzug 3 wird im Bereich der Hauptkrümmung des Führungsrohres 2 durch eine längliche Mulde 20 aufgenommen, deren Abmessungen so gewählt sind, daß die Kontaktfläche zwischen dem Bremsseilzug 3 und dem Führungsrohr 2 groß ist. Dadurch wird auch beim Einleiten hoher Seilkräfte die Belastung gut auf das Führungsrohr 2 verteilt und der Verschleiß sowohl des Führungsrohres 2 als auch des Bremsseilzuges 3 niedrig gehalten. Unterstützt wird dies durch die guten Gleiteigenschaften des Werkstoffes Polyoxymethylen des Führungsrohres 2.

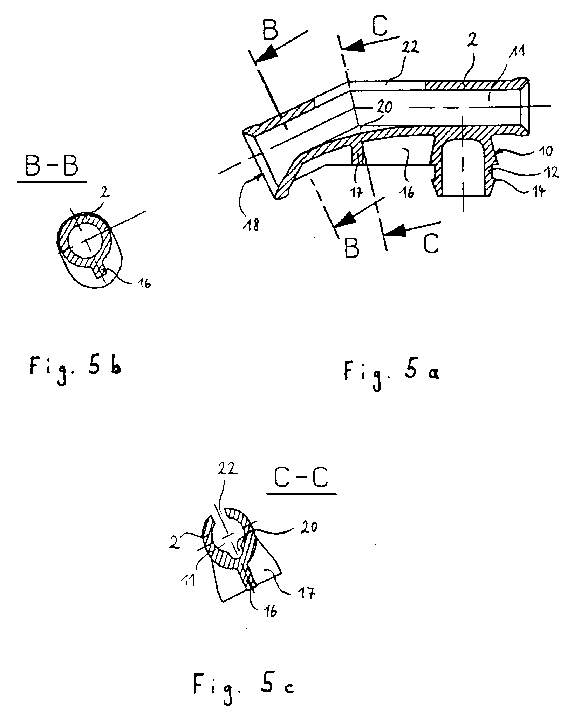

Fig. 4a zeigt eine vergrößerte Darstellung des Führungsrohres 2 sowie eine um 90° gedrehte Ansicht der ovalen Trichteröffnung 18 des Führungsrohres 2. Ein Ansatz 10 am Führungsrohr 2 dient zur Befestigung in der Ankerplatte 1. Hierzu werden Fortsätze 12 mit nockenförmigen Vorsprüngen 14 durch eine Ausnehmung in der Ankerplatte 1 gedrückt, bis die nockenförmigen Vorsprünge 14 hinter die Ankerplatte 1 greifen und ein Herausgleiten des Führungsrohres 2 aus der Ausnehmung der Ankerplatte 1 verhindern. In einer bevorzugten Ausführungsform sind an dem Ansatz 10 zwei halbkreisförmige Fortsätze 12 mit jeweils einem nockenförmigen Vorsprung 14 angeordnet. Zwei Ausnehmungen 15 trennen die beiden Fortsätze 12 voneinander und schaffen den Freiraum, der beim Hineinpressen der Fortsätze 12 in die Ausnehmung der Ankerplatte 1 benötigt wird, wenn sich die beiden Fortsätze 12 aufgrund der erhabenen nockenförmigen Vorsprünge 14 gegeneinander bewegen und erst nach dem Durchtritt der Vorsprünge 14 durch die Ausnehmung wieder auseinanderfedern. Es können aber auch drei oder mehrere vorzugsweise durch weitere Ausnehmungen 15 getrennte Vorsprünge 12 vorhanden sein.

Ein sich in Längsrichtung des Führungsrohres 2 im wesentlichen vom Ansatz 10 bis zur trichterförmigen Öffnung 18 erstreckender Längssteg 16 sorgt für eine erhöhte Stabilität des Führungsrohres 2 und leitet gleichzeitig einen weiteren Teil der Seilkraft in die Ankerplatte 1 ein. Mit einem im Bereich der Hauptkrümmung des Führungsrohres 2 angeordneten Quersteg 17 wird eine gute Querabstützung des Führungsrohres 2 auf der Ankerplatte 1 erreicht und ebenfalls anteilig die Seilkraft in die Ankerplatte 1 geleitet.

Fig. 4b zeigt eine weitere bevorzugte Ausführungsform des Ansatzes 10 des Führungsrohres 2. Bei dieser Ausführungsform weist der Ansatz 10 nur einen umlaufenden Fortsatz 12' mit zwei nockenförmigen Vorsprüngen 14' auf. Der Fortsatz 12' wird mit seinen nockenförmigen Vorsprüngen 14' ohne Kraftaufwand durch eine in Fig. 4c gezeigte Ausnehmung 30 in der Ankerplatte 1 der Trommelbremse geführt und durch eine anschließende Drehung in der Ankerplatte 1 verriegelt. Die Drehung beträgt abhängig von den Platzverhältnissen in der Bremse und der Ausführungsform des Fortsatzes 12' und der entsprechenden Ausnehmung 30 in der Ankerplatte 1 zwischen 20 und 90°.

In dem in Fig. 5a gezeigten Längsschnitt des Führungsrohres 2 ist neben der ovalen trichterförmigen Öffnung 18 auch die längliche Mulde 20 gut zu erkennen. Ein hier nicht gezeigter Bremsseilzug liegt nahezu auf der gesamten Länge des Führungsrohres 2 auf, ohne daß sein Verlauf über die Betätigungskraft erhöhende und den Materialabrieb steigernde scharfe Kanten führt. Eine oberhalb der Mulde 20 angeordnete Öffnung 22 ist beim Spritzgießen des Führungsrohres 2 von Bedeutung und wird nachstehend noch näher erläutert.

Fig. 5b zeigt den Schnitt B-B aus Fig. 5a, der die ovale Ausführung der Trichteröffnung 18 und die Lage des Längssteges 16 illustriert.

Fig. 5c, die den Schnitt C-C aus Fig. 5a zeigt, verdeutlicht die Form des der Abstützung und Krafteinleitung dienenden Quersteges 17. Die Quererstreckung des Quersteges 17 bezüglich des Führungsrohres 2 nimmt in Richtung auf die Ankerplatte 1 zu, um eine größere Abstützungsbasis auf der Ankerplatte 1 zu erreichen. Weiterhin zeigt Fig. 5c nochmals die Lage der den Bremsseilzug aufnehmenden Mulde 20 sowie die zum Spritzgießen vorteilhafte Öffnung 22.

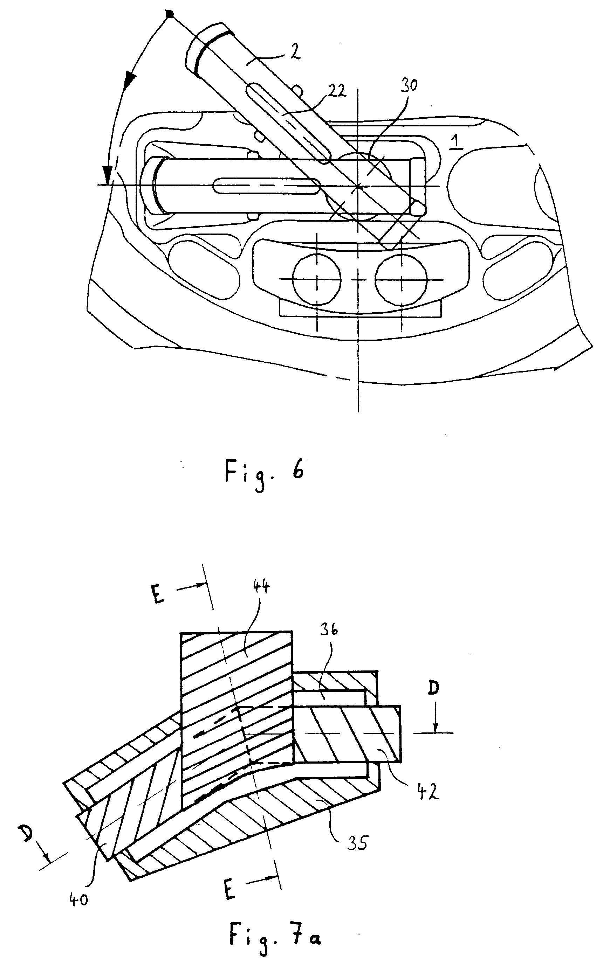

Fig. 6 zeigt schematisch einen wesentlichen Einbauschritt des Führungsrohres 2 einer Ausführungsform gemäß Fig. 4b in die Ankerplatte 1 einer Bremse. Nachdem der Fortsatz 12' des Ansatzes 10 in die Ausnehmung 30 der Ankerplatte 1 geführt worden ist, wird das Führungsrohr 2 durch eine Drehung in Pfeilrichtung in seine endgültige, verriegelte Position in der Ankerplatte 1 gebracht. Der hier nur angedeutete Drehwinkel beträgt abhängig vom zur Verfügung stehenden Platz in der Bremse etwa 20 - 90°, vorzugsweise 60 - 90°. Diese einfache Art der Montage mittels einer Bajonettverbindung oder auch das einfache Hineindrücken des Führungsrohres 2 einer Ausführungsform gemäß Fig. 4a in die Ausnehmung 30 der Ankerplatte 1 ersetzt das bisher übliche, zeitaufwendigere Anschweißen des Führungsrohres 2.

Die vielen Vorteile der erfindungsgemäßen Trommelbremse, wie z. B. die gut gleitende und auch bei Einleitung hoher Seilkräfte nur mit geringer Flächenpressung belastete Führung des Bremsseilzuges sowie die einfache Montage des Führungsrohres und auch dessen im Vergleich zum Stand der Technik erheblich günstigerer Preis, werden wesentlich durch das Material des Führungsrohres und den sich daraus ergebenden Formungsprozeß bestimmt. So kostet das in der erfindungsgemäßen Trommelbremse verwendete und durch Spritzguß hergestellte Kunststoff-Führungsrohr einschließlich der Montage in der Ankerplatte 1 der Bremse nur noch etwa 1/4 der bisher verwendeten Stahlausführung.

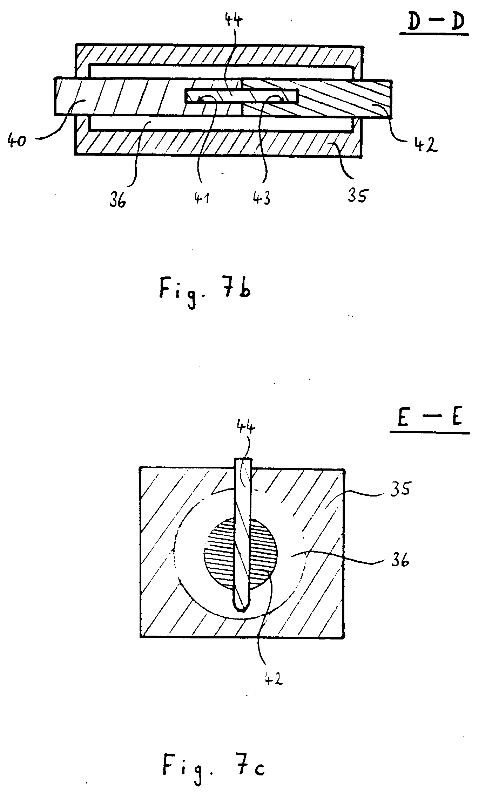

In Fig. 7a bis 7c ist schematisch eine Spritzgußform 35 zur Herstellung des Führungsrohres 2 dargestellt. Der Längsschnitt in Fig. 7a zeigt die nur angedeutete Spritzgußform 35, in deren Formhohlraum 36 sich von links ein Stempel 40 und von rechts ein Stempel 42 erstrecken. Die beiden Stempel 40, 42 formen im wesentlichen die Durchgangsausnehmung 11 des Führungsrohres 2. Die zueinander weisenden Stirnseiten der beiden Stempel 40, 42 stoßen flächig aneinander. Die Stempel 40, 42 weisen jeweils eine in Fig. 7b besser erkennbare schlitzförmige Ausnehmung 41, 43 auf, durch die ein Schieber 44 in die Spritzgußform 35 geführt ist.

Der in Fig. 7c gezeigte Schnitt E-E aus Fig. 7a läßt erkennen, daß der Schieber 44 sich durch die Stempel 40, 42 hindurcherstreckt und so ausgeführt ist, daß durch ihn die Abmessungen der länglichen Mulde 20 des Führungsrohres 2 vorgegeben sind. Insbesondere ist der Schieber 44 an seiner Unterseite sowohl in Längs- als auch in Querrichtung bezüglich der Durchgangsausnehmung 11 gerundet. Ohne den Schieber 44 würde die Durchgangsausnehmung 11 des Führungsrohres 2 dort, wo die beiden Stempel 40, 42 aneinanderstoßen, eine Kante aufweisen. Durch Verwendung des erfindungsgemäßen Schiebers 44 beim Spritzguß des Führungsrohres 2 entsteht nicht nur keine Kante in der Durchgangsausnehmung 11, sondern es wird gleichzeitig der Gleitradius des Führungsrohres 2 auf den Bremsseilzug 3 abgestimmt, ohne daß ein zusätzlicher Bearbeitungsvorgang des Führungsrohres 2 notwendig ist.

Nachdem in dem Fachmann bekannter Weise Kunststoff in den Formhohlraum 36 der Spritzgußform 35 eingebracht wurde, werden die Stempel 40, 42 sowie der Schieber 44 entfernt und daraufhin das Führungsrohr 2 der Spritzgußform 35 entnommen. Die Öffnung 22 des Führungsrohres 2 ist also durch den Schieber 44 bedingt und hat für die Funktion des Führungsrohres 2 keine Bedeutung.

## Patentansprüche

1. Trommelbremse, insbesondere für Kraftfahrzeuge, mit einer Feststellbremse, deren Bremsseilzug (3) mit einem in der Trommelbremse angeordneten Handbremshebel (4) lösbar verbunden ist, indem der Bremsseilzug mit einem Nippel (9) an seinem zugehörigen freien Ende durch ein in einer Ankerplatte (1) der Bremse befestigtes Führungsrohr (2) mit einer Durchgangsausnehmung in eine am Handbremshebel (4) vorgesehene Halterung geführt ist,
dadurch **gekennzeichnet**, daß das in der Ankerplatte (1) befestigte Führungsrohr (2) ein Kunststoffspritzgußteil ist und einen Ansatz (10) mit einer Schnappverbindung oder einer Bajonettverbindung zur Befestigung an der Ankerplatte (1) aufweist.

2. Trommelbremse nach Anspruch 1,
dadurch **gekennzeichnet**, daß das Führungsrohr (2) aus Polyoxymethylen gefertigt ist.

3. Trommelbremse nach Anspruch 1 oder 2,
dadurch **gekennzeichnet**, daß das Führungsrohr (2) aus Polyamid 6.6 mit eingelagertem Molybdändisulfid ist.

4. Trommelbremse nach einem der Ansprüche 1 bis 3,
dadurch **gekennzeichnet**, daß der Ansatz (10) einen Fortsatz (12') mit Vorsprüngen (14') aufweist, der durch eine Ausnehmung in der Ankerplatte (1) führbar und durch eine anschließende Drehung, insbesondere von zumindest 20°, in ihr verriegelbar ist.

5. Trommelbremse nach einem der Ansprüche 1 bis 4,
dadurch **gekennzeichnet**, daß das Führungsrohr (2) an seiner vom Handbremshebel (4) abgewandten Seite eine ovale Trichteröffnung (18) aufweist.

6. Trommelbremse nach einem der Ansprücheh 1 bis 5,
dadurch **gekennzeichnet**, daß in der Durchgangsausnehmung (11) im Bereich der Krümmung eine sich in Längsrichtung erstreckende Mulde (20) angeordnet ist.

7. Trommelbremse nach einem der Ansprüche 1 bis 6,
dadurch **gekennzeichnet**, daß sich auf der Außenseite des Führungsrohres (2) von der ovelen Trichteröffnung (18) bis zum Ansatz (10) ein Längssteg (16) erstreckt.

8. Trommelbremse nach einem der Ansprüche 1 bis 7,
dadurch **gekennzeichnet**, daß im Bereich der Hauptkrümmung des Führungsrohres (2) ein zur Ankerplatte (1) weisender Quersteg (17) angeordnet ist.

9. Verfahren zum Spritzgießen eines Führungsrohres aus Kunststoff für eine Trommelbremse gemäß einem der Ansprüche 1 bis 8, wobei in eine Spritzgußform (35) ein Stempel (40) von einer Seite bis zu einem Knick des späteren Führungsrohres eingeführt wird und ein anderer Stempel (42) von der gegenüberliegenden Seite bis zu dem Knick eingeführt wird, so daß die jeweiligen Stirnseiten beider Stempel (40, 42) flächig aneinander stoßen,
dadurch **gekennzeichnet**, daß ein Schieber (44) durch die beiden Stempel (40, 42) im Bereich des Knickes geschoben wird, der die Form der Mulde (20) im Bereich der Hauptkrümmung des Führungsrohres bestimmt.

## Claims

1. A drum brake, especially for motor vehicles, comprising a parking brake, the brake cable (3) of which is releasably connected to a hand brake lever (4) disposed in the drum brake, by virtue of the brake cable being passed, with a nipple (9) at its corresponding free end, through a guide tube (2) which is fastened in an anchoring plate (1) of the brake and has a passage opening, into a mounting fixture provided at the hand brake lever (4), **characterized** in that the guide tube (2) fastened in the anchoring plate (1) is a plastic injection molded part, including an attachment with a snap-on or bayonet-type connection for joining with the anchoring plate (1).

2. The drum brake as claimed in claim 1, characterized in that the guide tube (2) is made of polyoxymethylene.

3. The drum brake as claimed in claim 1 or 2, characterized in that the guide tube (2) is made of polyamide 6.6 with embedded molybdenum disulfide.

4. The drum brake as claimed in any one of claims 1 to 3, characterized in that the attachment (10) has an extension (12') formed with projections (14') and is adapted to be passed through a recess in the anchoring plate (1) and to be locked in the same by subsequent rotation, especially through at least 20°.

5. The drum brake as claimed in any one of claims 1 to 4, characterized in that the guide tube (2) includes an oval funnel aperture (18) at its end remote from the hand brake lever (4).

6. The drum brake as claimed in any one of claims 1 to 5, characterized in that a depression (20) extending in longitudinal direction is provided in the passage opening (11) in the region of the curvature.

7. The drum brake as claimed in any one of claims 1 to 6, characterized in that a longitudinal fin (16) extends along the outside of the guide tube (2) from the oval funnel aperture (18) to the attachment (10).

8. The drum brake as claimed in any one of claims 1 to 7, characterized in that a transverse fin (17) directed towards the anchoring plate (1) is arranged in the region of the main curvature of the guide tube (2).

9. A method of injection molding a guide tube of plastics for a drum brake as claimed in any one of claims 1 to 8, wherein a ram (40) is introduced from one end into an injection mold (35) up to a bend of the future guide tube and another ram (42) is introduced from the opposite end up to the bend so that the respective face ends of the two rams (40, 42) engage each other in surface area contact, **characterized** in that a plunger (44) is pushed through the two rams (40, 42) in the area of the bend to define the shape of the depression (20) in the region of the main curvature of the guide tube.

## Revendications

1. Frein à tambour, notamment pour véhicules à moteur, comprenant un freinage de parc dont le câble est lié de façon amovible avec un levier (4) disposé dans le frein à tambour,
le câble de freinage, pourvu d'un embout d'arrêt (9) à son extrémité correspondante, étant guidé vers un élément de maintien prévu près du levier de freinage (4), par un tube de guidage (2) présentant un évidement de passage et passant à travers une plaque d'ancrage (1),
caractérisé en ce que le tube de guidage (2) fixé dans la plaque d'ancrage est une pièce en matière plastique moulée pour injection et comporte un saillant (10) pourvu d'une liaison par encliquetage, ou à bayonnette, avec la plaque d'ancrage (1).

2. Frein à tambour selon la revendication 1,
caractérisé en ce que le tube de guidage (2) est réalisé en polyoxyméthylène.

3. Frein à tambour selon l'une quelconque des revendications 1 ou 2,
caractérisé en ce que le tube de guidage (2) est en polyamide 6.6 contenant du sulfure de molybdène.

4. Frein à tambour selon l'une quelconque des revendications 1 à 3,
caractérisé en ce que le saillant (10) comporte un prolongement (12') présentant des éléments en saillie (14'), ledit prolongement pouvant être guidé par un évidement ménagé dans la plaque d'ancrage (1) et pouvant être verrouillé dans celle-ci par une rotation ultérieure en particulier d'au moins 20°.

5. Frein à tambour selon l'une quelconque des revendications 1 à 4,
caractérisé en ce que le tube de guidage (2) présente sur son côté éloigné du levier de frein à main (4) une ouverture ovale en forme d'entonnoir (18).

6. Frein à tambour selon l'une quelconque des revendications 1 à 5,
caractérisé en ce qu'une rainure (20) s'étendant dans le sens longitudinal, est disposée dans l'évidement de passage (11) dans le secteur du coude.

7. Frein à tambour selon l'une quelconque des revendications 1 à 6,
caractérisé en ce qu'un renfort longitudinal s'étend sur le côté extérieur du tube de guidage (2) depuis l'ouverture ovale en forme d'entonnoir (18) jusqu'à l'épaulement (10).

8. Frein à tambour selon l'une quelconque des revendications 1 à 7,
caractérisé en ce qu'un renfort traversant (17) orienté en direction de la plaque d'ancrage (1) est placé dans le secteur d'un coude principal du tube de guidage (2).

9. Procédé de moulage par injection d'un tube de guidage en matière plastique destinée à un frein à tambour selon l'une quelconque des revendications 1 à 8, dans lequel un poinçon (40) est introduit dans un moule d'injection (35), depuis un côté jusqu'à une partie marquant le coude du futur tube de guidage, et un autre poinçon (42) depuis le côté opposé jusqu'à la partie marquant le coude, de manière à ce que les deux faces frontales des deux poinçons (40, 42) de rejoignent bout à bout,
caractérisé en ce qu'un registre (44) est inséré entre les deux poinçons (40, 42) dans le secteur la partie marquant le coude, lequel détermine la forme de la rainure (20) prévue dans le secteur du coude principal du tube de guidage.
